# EUROPÄISCHE PATENTSCHRIFT

(11) **EP 1 986 868 B1**
(45) Veröffentlichungstag und Bekanntmachung des Hinweises auf die Patenterteilung: **05.06.2013**
(21) Anmeldenummer: 07704343.8
(22) Anmeldetag: 05.02.2007
(51) Int. Cl.: B42D 15/10, G07D 7/00, G07D 7/20

(54) **DOKUMENT, INSBESONDERE WERT- ODER SICHERHEITSDOKUMENT, VERFAHREN ZUR EINGABE EINER INFORMATION, COMPUTERPROGRAMMPRODUKT UND LESEGERÄT**
DOCUMENT IN PARTICULAR VALUE OR SECURITY DOCUMENT METHOD FOR INPUTTING A PIECE OF INFORMATION COMPUTER PROGRAMME PRODUCT AND READING DEVICE
DOCUMENT, NOTAMMENT DOCUMENT DE VALEUR OU DE SÉCURITÉ, PROCÉDÉ D'ENTRÉE D'UNE INFORMATION, PRODUIT DE PROGRAMME INFORMATIQUE ET DISPOSITIF DE LECTURE

(30) Priorität: 24.02.2006 DE 102006009128
(43) Veröffentlichungstag der Anmeldung: 05.11.2008
(73) Patentinhaber: Bundesdruckerei GmbH, 10958 Berlin (DE)
(72) Erfinder: LEOPOLD, André, 10119 Berlin (DE); PAESCHKE, Manfred, 16348 Wandlitz (DE)
(74) Vertreter: Richardt Patentanwälte GbR
(86) Internationale Anmeldenummer: PCT/EP2007/051059
(87) Internationale Veröffentlichungsnummer: WO 2007/099017

(56) Entgegenhaltungen:
- EP-A- 1 486 803
- DE-A1- 10 052 402
- DE-A1- 10 336 566
- DE-A1- 10 344 384
- DE-A1- 19 539 355
- US-A1- 2004 012 496

## Beschreibung

Die Erfindung betrifft ein Dokument, insbesondere ein Wert- oder Sicherheitsdokument, sowie ein Verfahren zur Eingabe einer Information in einen Schaltkreis eines Dokuments und ein entsprechendes Computerprogrammprodukt und eine Lesegerät.

Dokumente mit einem integrierten elektronischen Schaltkreis sind aus dem Stand der Technik an sich in verschiedener Form bekannt. Beispielsweise gibt es solche Dokumente in überwiegend papierbasierter Form, wie zum Beispiel als elektronischen Reisepass, oder als Chipkarte, insbesondere als sogenannte Smart Card, in kontaktbehafteter, kontaktloser oder Dual-Interface Ausführung.

Insbesondere sind verschiedene Funk-Erkennungssysteme für solche Dokumente aus dem Stand der Technik bekannt, die auch als Radio Frequency Identification (RFID) Systeme bezeichnet werden. Vorbekannte RFID-Systeme beinhalten im Allgemeinen zumindest einen Transponder und eine Sende-Empfangseinheit. Der Transponder wird auch als RFID-Etikett, RFID-Chip, RFID-Tag, RFID-Label oder Funketikett bezeichnet; die Sende-Empfangseinheit wird auch als Lesegerät oder Reader bezeichnet. Ferner ist oft die Integration mit Servern, Diensten und sonstigen Systemen, wie zum Beispiel Kassensystemen oder Warenwirtschaftssystemen über eine so genannte Middle Ware vorgesehen.

Die auf einem RFID-Transponder gespeicherten Daten werden über Radiowellen verfügbar gemacht. Bei niedrigen Frequenzen geschieht dies induktiv über ein Nahfeld, bei höheren Frequenzen über ein elektromagnetisches Femfeld. Die Entfernung, über die ein RFID-Transponder angesprochen und ausgelesen werden kann, schwankt aufgrund der Ausführung (passiv / aktiv), dem benutzten Frequenzband, der Sendestärke und anderen Umwelteinflüssen zwischen wenigen Zentimetern und mehr als einem Kilometer.

Ein RFID-Transponder beinhaltet üblicherweise einen Mikrochip und eine Antenne, die in einem Träger oder Gehäuse untergebracht oder auf ein Substrat aufgedruckt sind. Aktive RFID-Transponder verfügen ferner über eine Energiequelle, wie zum Beispiel eine Batterie.

RFID-Transponder sind für verschiedene Dokumente einsetzbar, insbesondere in Chipkarten, beispielsweise zur Realisierung einer elektronischen Geldbörse oder für Electronic Ticketing, oder werden in Papier, wie zum Beispiel in Wert- und Sicherheitsdokumenten, insbesondere Geldscheinen und Ausweisdokumenten, integriert. Aus der DE 201 00 158 U1 ist beispielsweise eine Identifikations- und Sicherheitskarte aus laminierten und / oder gespritzten Kunststoffen bekannt, die einen integrierten Halbleiter mit einer Antenne zur Durchführung eines RFID-Verfahrens beinhaltet. Aus der DE 10 2004 008 841 A1 ist ferner ein buchartiges Wertdokument, wie zum Beispiel ein Passbuch bekannt geworden, welches eine Transpondereinheit beinhaltet.

Solche Sicherheits- oder Wertdokumente werden im Stand der Technik zum Teil als Chipkarten realisiert. Diese können mit einer kontaktbehafteten oder kontaktlosen Schnittstelle, beispielsweise einem RFID-Interface, ausgestattet sein oder mit einer Schnittstelle, die sowohl eine drahtgebundene als auch eine drahtlose Kommunikation mit einem Chipkarten-Terminal zulässt. Im letzteren Fall spricht man auch von so genannten Dual-Interface Chipkarten. Chipkarten-Kommunikationsprotokolle und -verfahren sind zum Beispiel in der Norm ISO 14443 festgelegt.

Ein Nachteil solcher Dokumente mit RFID-Funktionalität ist, dass ohne Einverständnis des Trägers des Dokuments die RFID-Schnittstelle angesprochen werden kann, wenn sich das Dokument beispielsweise in der Brieftasche des Trägers befindet. Schutzmechanismen zum Schutz gegen unbefugtes Auslesen der Daten aus einem solchen Dokument werden auch als "Basic Access Control" bezeichnet, vgl. hierzu "Machine Readable Travel Document", Technical Report, PKI for Machine Readable Travel Documents Offering ICC Read-Only Access, Version 1.1, Oktober 01, 2004, International Civil Aviation Organisation (htt://www.icao.int/mrtd/download/documents/TR-PKI%20mrtds%20ICC%20read-only%20access%20v1 1.pdf)

Aus der DE 199 21 335 A1 ist ein Datenträger, wie z.B. eine Kreditkarte, Banknote, Eintrittskarte, bekannt, der eine Mikrolinse zur Beleuchtung eines optischen Sicherheitsmerkmals aufweist. Das von dort reflektierte und gebeugte Licht wird mit einem System aus zwei weiteren reflektierenden Mikrolinsen abgebildet. In einer Zwischenebene kann mit Hilfe von Detektoren und Filtern diese Abbildung so beeinflusst werden, dass eine gewünschte Eingangsverteilung zu einer bestimmten Ausgangsverteilung führt.

Der Erfindung liegt dem gegenüber die Aufgabe zu Grunde, ein verbessertes Dokument mit einem Schaltkreis zu schaffen, sowie ein Verfahren zur Eingabe einer Information in den Schaltkreis eines solchen Dokuments und ein entsprechendes Computerprogrammprodukt, beispielsweise zur Ausführung durch einen in das Dokument integrierten Mikroprozessor, und ein Lesegerät.

Erfindungsgemäß wird ein Dokument geschaffen, das einen Bereich zur Ausbildung beispielsweise einer optischen Maske aufweist. Hinter dem Bereich ist eine strahlungssensitive Matrix zur Erfassung einer optischen Information angeordnet. Ferner hat das Dokument einen Schaltkreis, insbesondere einen integrierten elektronischen Schaltkreis, zur Eingabe der erfassten optischen Information.

Als optische Maske wird im Sinne dieser Patentanmeldung jedes optische Element verstanden, welches einer einfallenden Strahlung eine optische Information aufmoduliert, wie z.B. durch ortsabhängige Modulation der Stahlungsintensitäten und/oder durch Beugung der Strahlung.

Bei dem Dokument kann es sich beispielsweise um ein Wert- oder Sicherheitsdokument, insbesondere ein Zahlungsmittel, ein Ausweisdokument, wie zum Beispiel einen Reisepass, Personalsausweis, Visum, Führerschein oder dergleichen handeln, und / oder um eine Chipkarte.

Das Dokument kann für eine dezentrale Personalisierung als Rohling zum Beispiel an Pass- und Ausweisbehörden, Führerscheinstellen und ähnliche Institutionen geliefert werden. Bei der ausstellenden Behörde findet dann die Personalisierung des Bereichs statt, wodurch die optische Maske ausgebildet wird. Andererseits ist es auch möglich, dass die Personalisierung bereits bei der Herstellung des Dokuments zentral vorgenommen wird.

Nach einer Ausführungsform der Erfindung ist der Bereich zur Ausbildung der optischen Maske für die Strahlung in einem bestimmten Wellenlängenbereich im wesentlichen transparent, das heißt, es wird ein relativ hoher Anteil von Strahlung einer bestimmten Frequenz durch den Bereich hindurch transmittiert, so dass er zu der strahlungssensitiven Matrix gelangen kann. Nach Ausbildung der optischen Maske in dem Bereich, wird der Bereich teilweise durch die optische Maske abgedeckt, wobei die Maske für die Strahlung der bestimmten Frequenz im wesentlichen undurchlässig ist, das heißt, es gelangt dort, wo die Maske den Bereich abdeckt, kein oder nur ein geringer Teil der Strahlung der bestimmten Frequenz durch den Bereich hindurch zu der strahlungssensitiven Matrix. Die Maske besteht also aus für einen bestimmten Frequenzbereich transparenten Bereichen und nicht transparenten, beispielsweise geschwärzten Bereichen, wobei die einzelnen Bereiche jeweils einem Pixel entsprechen können.

Nach einer Ausführungsform der Erfindung hat der Bereich für eine Personalisierung mittels Laser sogenannte Laser-Initiatoren, wie z.B. Laserstrahl absorbierender Pigmente, insbesondere Metall- oder Goldpigmente, beispielsweise Iriodin oder Lazerflair Pigmente (vgl. http://www.merck-pigments.com/servlet/PB/show/1129890/E effekte 02 2003.pdf).

Gemäß einer Ausführungsform der Erfindung kann die optische Maske auf den Bereich aufgedruckt sein.

Gemäß einer Ausführungsform der Erfindung kann die optische Maske ein Hologramm aufweisen.

Nach einer Ausführungsform der Erfindung ist die optische Maske zur Intensitätsmodulation der auf den Bereich auftreffenden Strahlung ausgebildet, wodurch die optische Information der Strahlung aufmoduliert wird. Alternativ oder zusätzlich kann die Maske auch diffraktive Eigenschaften haben, so dass durch auf den Bereich einfallende Strahlung ein Beugungsmuster auf der strahlungssensitiven Matrix entsteht, welches die optische Information beinhaltet.

Gemäß einer Ausführungsform der Erfindung wirkt die optische Maske auf einen Frequenzanteil der Strahlung im wesentlichen reflektiv. Dieser Frequenzanteil der Strahlung wird jedoch durch den Bereich hindurch transmittiert, und zwar dort, wo er nicht von der Maske abgedeckt ist. In dieser Ausführungsform befindet sich zwischen dem Bereich mit der optischen Maske und der strahlungssensitiven Matrix ein Filter, der im wesentlichen nur den bestimmten Frequenzanteil hindurchlässt. Es erreicht im Ergebnis also im wesentlichen nur der bestimmte Frequenzanteil der Strahlung, der auf nicht maskierte Abschnitte des Bereichs auftrifft die strahlungssensitive Matrix. Die strahlungssensitive Matrix ist vorzugsweise so ausgebildet, dass sie in dem bestimmten Frequenzbereich besonders empfindlich ist. Durch eine solche Anordnung lässt sich das Signalrauschleistungsverhältnis (SNR) für die Erfassung der optischen Information verbessern.

Es kann sich bei der strahlungssensitiven Matrix um eine Photodiodenmatrix oder eine charge coupled device (CCD) Matrix handeln.

Gemäß einer Ausführungsform der Erfindung hat die strahlungssensitive Matrix erste, in einem bestimmten Frequenzbereich transparente Elektroden, die in eine erste Richtung verlaufen und zweite Elektroden, die in eine zweite Richtung verlaufen. Beispielsweise stehen die ersten und zweiten Richtungen senkrecht aufeinander. Zwischen den ersten und zweiten Elektroden befindet sich ein Photoleiter. Durch die Schnittpunkte der ersten und zweiten Elektroden werden also Bildpunkte definiert, die durch Ansteuerung der strahlungssensitiven Matrix mit einer geeigneten Treiberschaltung und / oder Treibersoftware ausgelesen werden können. Der bestimmte Frequenzbereich muss in dem Bereich des Anteils der Strahlung liegen, der durch den transparenten Bereich der Maske transmittiert wird.

Gemäß einer Ausführungsform der Erfindung hat das Dokument einen elektronischen Speicher zur Speicherung der mit Hilfe der strahlungssensitiven Matrix erfassten optischen Information.

Gemäß einer Ausführungsform der Erfindung hat das Dokument eine Logikschaltung, vorzugsweise einen Mikroprozessor, zur Verarbeitung der mit Hilfe der strahlungssensitiven Matrix erfassten optischen Information. Wenn die optische Matrix beispielsweise durch einen Barcode gebildet wird, kann der Mikroprozessor die Barcode-Information aus der erfassten optischen Information zurückgewinnen.

Gemäß einer Ausführungsform der Erfindung hat das Dokument einen elektronischen Speicher zur Speicherung einer Referenzinformation und Mittel zur Überprüfung der Referenzinformation und der erfassten optischen Information auf Übereinstimmung. Hierdurch kann ein Sicherheitsmerkmal realisiert werden, indem eine Verwendung des Dokuments nur dann freigegeben wird, wenn Übereinstimmung zwischen der Referenzinformation und der erfassten optischen Information vorliegt. Durch dieses Sicherheitsmerkmal lässt sich die Fälschungssicherheit von Wert- und Sicherheitsdokumenten verbessern.

Das Dokument kann Mittel zur Generierung von elektrischer Energie aus der Strahlung zur mittelbaren oder unmittelbaren Versorgung des Schaltkreises haben. Hierzu kann ein photoelektrischer Effekt genutzt werden, indem zum Beispiel eine Photozelle in das Dokument integriert wird. Diese kann unmittelbar den Schaltkreis mit elektrischer Energie versorgen und / oder eine wiederaufladbare Batterie, so dass auch Funktionen des Dokuments genutzt werden können, wenn keine Strahlungsquelle vorhanden ist.

Das Dokument kann kryptographische Mittel als Zugriffsschutz auf den elektronischen Speicher haben. Ein schreibender oder lesender Zugriff auf den elektronischen Speicher ist also beispielsweise nur dann möglich, wenn hierzu ein kryptographisches Protokoll zuvor erfolgreich abgearbeitet worden ist.

Die optische Maske kann eine Abbildung darstellen, beispielsweise ein Passphoto und / oder eine alphanumerische Angabe, einen Barcode oder dergleichen.

Die vorliegende Erfindung ist also für verschiedene Einsatzgebiete vorteilhaft anwendbar:
a) Mit Hilfe der Erfindung lässt sich ein optischer Speicher realisieren, der unmittelbar elektronisch auslesbar ist. Dadurch lässt sich die üblicherweise begrenzte Speicherkapazität von in Dokumenten integrierten elektronischen Speichern erweitern.
b) Wenn in dem elektronischen Speicher eine Referenzinformation zum Abgleich mit der erfassten optischen Information gespeichert ist, wird hierdurch ein Sicherheitsmerkmal geschaffen, welche eine Selbstverifikation des Dokuments ermöglicht. Vor einer Verwendung des Dokuments wird also von dem Dokument selbst geprüft, ob die erfasste optische Information mit der Referenzinformation übereinstimmt, bevor die Verwendung freigegeben wird.
c) Durch die Erfindung kann eine Basic Access Control geschaffen werden, um einen von einem Benutzer ungewollten und / oder unbemerkten Zugriff auf das Dokument, beispielsweise mit einem RFID-Verfahren, zu unterbinden. Vorraussetzung für eine Verwendung des Dokuments kann beispielsweise sein, dass der Träger des Dokuments dieses Dokument zum Beispiel aus seiner Brieftasche oder seinem Portemonnaie herausnimmt, so dass es dem Tageslicht ausgesetzt wird. Hierdurch wird die strahlungssensitive Matrix mit Licht beaufschlagt, welches die von der optischen Maske aufmodulierte Information beinhaltet. Erst nachdem diese optische Information in dem Dokument erfasst und überprüft worden ist, kann das Dokument verwendet werden, indem beispielsweise die RFID-Funktionalität des Dokuments freigeschaltet wird.

Ferner sind Kombinationen und Unterkombinationen der oben genannten Verwendungsmöglichkeiten in demselben Dokument möglich. Insbesonder kann die Überprüfung im Anwendungsfall c) wie in dem Anwendungsfall b) erfolgen.

In einem weiteren Aspekt betrifft die Erfindung ein Verfahren zur Eingabe einer Information in einen integrierten elektronischen Schaltkreis eines Dokuments, wobei das Dokument eine optische Maske hat, hinter der eine strahlungssensitive Matrix angeordnet ist, wobei die Matrix mit dem Schaltkreis gekoppelt ist. Zur Eingabe der Information wird das Dokument einer Strahlung, wie zum Beispiel dem Tageslicht oder einer Strahlungsquelle einer anderen Frequenz ausgesetzt, wobei der auf das Dokument im Bereich der optischen Maske auffallenden Strahlung eine Information aufmoduliert wird, die mit Hilfe der strahlungssensitiven Matrix erfasst und in den Schaltkreis eingegeben werden kann.

In einem weiteren Aspekt betrifft die Erfindung ein Computerprogrammprodukt mit ausführbaren Programminstruktionen, beispielsweise zur Ausführung durch einen integrierten elektronischen Schaltkreis, der in einem Wert- oder Sicherheitsdokument integriert ist. Das Computerprogramm dient zur Ansteuerung der strahlungssensitiven Matrix, um die optische Information zu erfassen, so dass sie von dem Schaltkreis weiter verarbeitet und / oder gespeichert werden kann.

In einem weiteren Aspekt betrifft die Erfindung ein Lesegerät für ein erfindungsgemäßes Dokument. Das Lesegerät hat eine Strahlungsquelle oder dient zur Ansteuerung einer Strahlungsquelle. Durch die Strahlungsquelle ist das Dokument einer Strahlung aussetzbar, beispielsweise um eine Selbstverifikation des Dokuments auszulösen.

Im weiteren werden Ausführungsformen der Erfindung mit Bezugnahme auf die Zeichnungen näher erläutert. Es zeigen:
- Figur 1: ein schematisches Blockdiagramm einer Ausführungsform eines erfindungsgemäßen Dokuments,
- Figur 2: ein schematisches Blockdiagramm einer weiteren Ausführungsform eines erfindungsgemäßen Dokuments,
- Figur 3: ein Flussdiagramm einer Ausführungsform eines erfindungsgemäßen Verfahrens,
- Figur 4: eine Draufsicht auf eine Ausführungsform eines erfindungsgemäßen Dokuments mit einem kartenförmigen Dokumentenkörper und einem RFID-Element,
- Figur 5: eine Draufsicht einer Ausführungsform eines erfindungsgemäßen Dokuments in einem reisepassförmigen Dokumentenkörper,
- Figur 6: eine Draufsicht einer Ausführungsform eines erfindungsgemäßen Dokuments in einem kartenförmigen Dokumentenkörper mit einem kontaktbehafteten Chipmodul,
- Figur 7: eine Draufsicht einer Ausführungsform eines erfindungsgemäßen Dokuments mit einem kartenförmigen Dokumentenkörper und einem Dual-Interface Chipmodul,
- Figur 8: eine schematische Querschnittsdarstellung einer Ausführungsform eines erfindungsgemäßen Dokuments mit einem von außen nicht kontaktierbaren in den Kartenkörper integrierten elektronischen Schaltkreis,
- Figur 9: eine schematische Querschnittsdarstellung einer Ausführungsform eines erfindungsgemäßen Dokuments mit einem kontaktbehafteten Chipmodul,
- Figur 10: eine Draufsicht auf eine Ausführungsform eines erfindungsgemäßen Dokuments mit mehreren optischen Masken,
- Figur 11: ein schematischer Querschnitt durch eine Ausführungsform eines erfindungsgemäßen Dokuments mit einem Schichtaufbau der strahlungssensitiven Matrix,
- Figur 12: eine perspektivische Ansicht einer Ausführungsform der strahlungssensitiven Matrix.
- Die Figur 13: ein Blockdiagramm einer Ausführungsform eines erfindungsgemäßen Lesegeräts.

In der nachfolgenden Figurenbeschreibung werden einander entsprechende Elemente mit denselben Bezugszeichen gekennzeichnet.

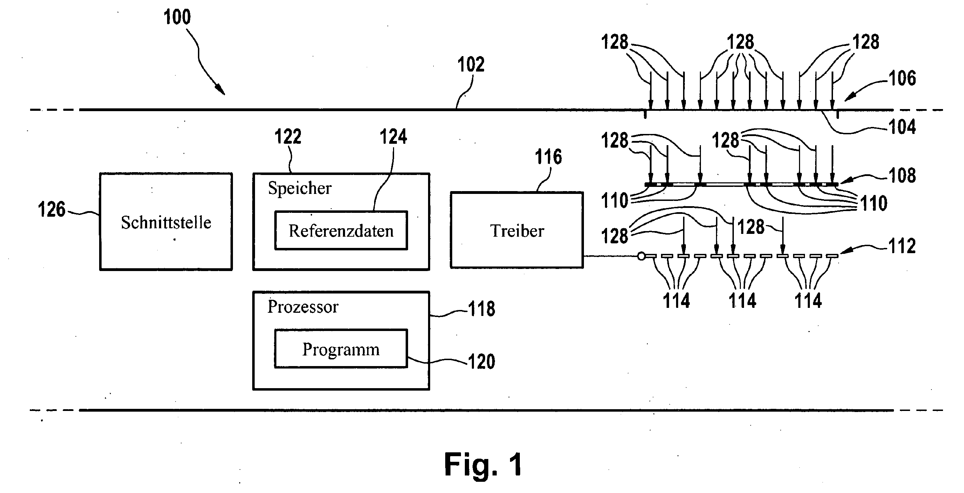

Die Figur 1 zeigt ein Dokument 100, wie zum Beispiel ein Wert- oder Sicherheitsdokument. Das Dokument 100 kann überwiegend papier- oder kunststoffbasiert ausgebildet sein. Auf seiner Dokumentenoberfläche 102 hat das Dokument 100 ein Fenster 104, durch welches Strahlung 106 auf einen Bereich 108 im Inneren des Dokuments 100 fallen kann. Alternativ kann auch die gesamte Dokumentenoberfläche 102 transparent sein. In dem Bereich 108 ist eine optische Maske ausgebildet, die aus Maskenbereichen 110 besteht.

Die Maskenbereiche 110 können auf den Bereich 108 durch eine Personalisierung aufgebracht werden. Hierbei können sämtliche aus dem Stand der Technik bekannte Personalisierungsmethoden verwendet werden, beispielsweise Personalisierungsverfahren mittels Laser oder drucktechnische Personalisierungsverfahren.

Der Bereich 108 ist hier für eine graphische Personalisierung ausgebildet. Der Bereich 108 ist beispielsweise weitgehend transparent und besteht vorzugsweise aus einem transparenten Polymer, insbesondere aus Polycarbonat mit Laser-Initiatoren. Durch Beaufschlagung des Bereichs 108 mit einem Laser erfährt dieser Bereich in den Maskenbereichen 110 eine Färbung, insbesondere eine Schwärzung, entsprechend der Personalisierungsinformation. Die visuell erkennbare Personalisierung des Bereichs 108 kann beispielsweise mittels Graustufenlaserung aufgebracht werden. Ferner ist auch eine Personalisierung beispielsweise mittels Thermotransfer- bzw. Diffusionsdruck oder Tintenstrahldruck möglich. Als Personalisierungstechnik können auch individuelle Hologramme verwendet werden.

Ferner kann der Bereich 108 auch durch ein Anzeigeelement, zum Beispiel ein bistabiles Anzeigeelement gebildet werden, welches personalisierbar ist. Hierfür kommt beispielsweise eine Anzeigevorrichtung mit beweglichen Anzeigeelementen in Frage, beispielsweise wie sie in der DE 10 2005 039 524 offenbart ist.

In Richtung der Strahlung 106 hinter dem Bereich 108 ist eine strahlungssensitive Matrix 112 angeordnet. Die strahlungssensitive Matrix kann beispielsweise als Photodiodenmatrix oder CCD Matrix ausgebildet sein, wobei durch jedes Matrixelement 114 der strahlungssensitiven Matrix 112 ein Bildpunkt erfassbar ist.

Die strahlungssensitive Matrix 112 ist mit einem Treiber 116 verbunden, der die strahlungssensitive Matrix 112 zum Auslesen der Matrixelemente 114 ansteuern kann.

Das Dokument 100 beinhaltet ferner eine Logikschaltung, insbesondere einen Prozessor 118, zur Ausführung von Programminstruktionen 120.

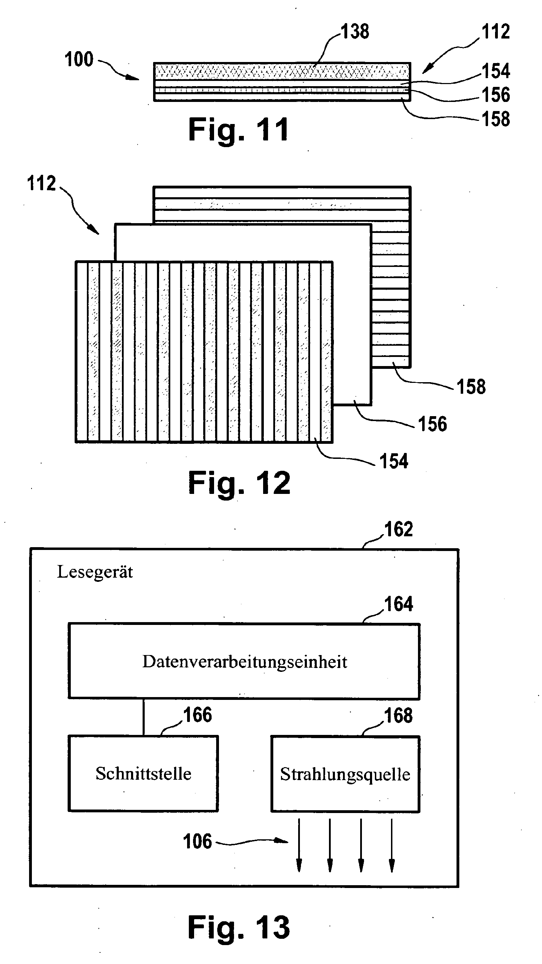

Das Dokument 100 beinhaltet ferner einen elektronischen Speicher 122. Je nach Anwendungsfall kann der elektronische Speicher flüchtig oder nicht-flüchtig sein. Wenn das Dokument 100 zur Selbstverifikation ausgebildet sein soll, ist der elektronische Speicher 122 nicht-flüchtig, um Referenzdaten 124 persistent zu speichern. Das Dokument 100 hat ferner eine kontaktbehaftete, oder eine kontaktlose, insbesondere eine RFID-Schnittstelle 126. Die Schnittstelle 126 kann auch als sogenanntes Dual Mode Interface ausgebildet sein, welches sowohl eine kontaktbehaftete als auch eine kontaktlose Kommunikation mit einem externen Lesegerät (vgl. Fig 13) ermöglicht.

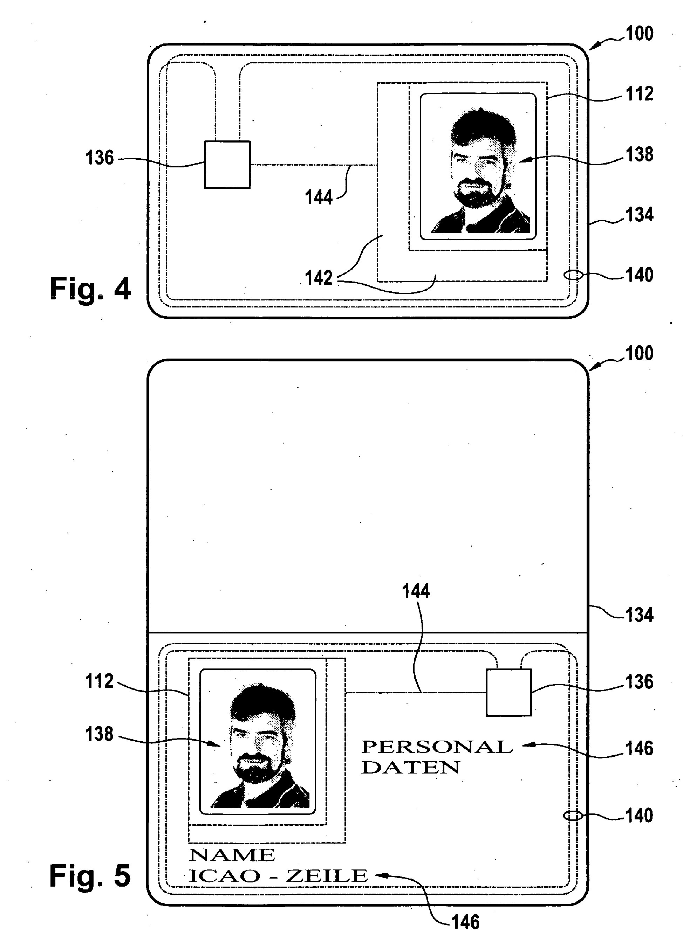

Die elektrischen und elektronischen Komponenten des Dokuments 100, das heißt der Treiber 116, der Prozessor 118, der Speicher 122 und die Schnittstelle 126 können ganz oder teilweise als ein oder mehrere integrierte elektronische Schaltkreise ausgebildet sein (vgl. IC 136 der Fig. 4 bis 9).

Zur Verwendung des Dokuments 100 wird dieses mit der Strahlung 106 beaufschlagt. Bei der Strahlung 106 kann es sich um das Tageslicht handeln oder um Strahlung einer künstlichen Strahlungsquelle, wie zum Beispiel einer Innenraumbeleuchtung, die Licht im sichtbaren Bereich liefert oder einer speziellen Strahlungsquelle, die diffuses, kollineares oder Laserlicht in einem sichtbaren und / oder unsichtbarem Frequenzbereich, wie zum Beispiel in einem Infrarotbereich oder kurzwelligen, z.B. ultravioletten, Bereich liefert.

Die Strahlung 106 tritt durch das Fenster 104 an der Oberfläche 102 in das Dokument 100 ein und trifft auf die in dem Bereich 108 ausgebildete Maske.

In dem Anwendungsfall, der in der Figur 1 gezeigt ist, wird kollineare Strahlung 106 verwendet, wobei einzelne kollineare Strahlen 128 der Strahlung 106 in der Figur 1 durch Pfeile dargestellt sind.

Die Maskenbereiche 110 sind so ausgebildet, dass sie für Strahlung in einem bestimmten Frequenzbereich im wesentlichen undurchlässig sind. Im weiteren wird davon ausgegangen, dass die Strahlen 128 in diesem Frequenzbereich liegen. Trifft ein Strahl 128 also auf einen Maskenbereich 110, so wird dieser Strahl 128 dort absorbiert oder reflektiert. Vorzugsweise wird kein oder nur ein geringer Anteil dieses Strahls 128 durch den Maskenbereich 110 hindurch in Richtung auf die strahlungssensitive Matrix 112 transmittiert.

Trifft einer der Strahlen 128 hingegen an einer Stelle auf den Bereich 108, der nicht durch einen Maskenbereich 110 verdeckt wird, so wird dieser Strahl 128 durch den Bereich 108 transmittiert, da der Bereich 108 für diesen Frequenzbereich im wesentlichen transparent ist. Dies hat zur Folge, dass dieser Strahl 128 im wesentlichen ungeschwächt auf eines der Matrixelemente 114 der lichtsensitiven Matrix 112 auftrifft, wie in der Figur 1 durch die Pfeile symbolisiert.

Dadurch wird auf der strahlungssensitiven Matrix 112 ein durch die Maske des Bereichs 108 bestimmtes Bild projiziert, welches eine optische Information trägt. Dieses schwarz-weiß Bild kann aus der strahlungssensitiven Matrix 112 durch den Treiber 116 ausgelesen werden. Wenn ein Matrixelement 114 nicht von einem der Strahlen 128 im wesentlichen ungeschwächt erreicht wird, so hat dies beispielsweise die logische Information "0" zur Folge; wenn hingegen ein Strahl 128 im wesentlichen ungeschwächt ein Matrixelement 114 erreicht, so hat dies die logische Information "1" zur Folge. Durch Ansteuerung der strahlungssensitiven Matrix 112 kann der Treiber 116 die einzelnen Informationsbits auslesen.

Falls die auf den Bereich 108 angeordnete Maske in ihren Maskenbereichen 110 verschiedene Grauwerte oder Farben beinhaltet, so wird dementsprechend ein Bild mit verschiedenen Grauwerten bzw. ein Farbbild auf die strahlungssensitive Matrix 112 projiziert, so dass pro Matrixelement 114 mehrere Informationsbits erfasst werden können.

Beispielsweise wird die Ausführung der Programminstruktionen 120 automatisch gestartet, wenn über ein externes Lesegerät (in der Figur 1 nicht dargestellt) über die Schnittstelle 126 eine Anforderung zu dem Prozessor 118 übertragen wird. Wenn das Dokument 100 dann mit der Strahlung 106 beaufschlagt ist, liefert der Treiber 116 die von der strahlungssensitiven Matrix 112 erfasste optische Information an den Prozessor 118. Anschließend werden die Referenzdaten 124 aus dem Speicher 122 ausgelesen und auf Übereinstimmung mit den von dem Treiber 116 gelieferten Informationen überprüft.

Wenn eine solche Übereinstimmung nicht vorliegt, wird die Anforderung des externen Lesegeräts zurückgewiesen; im gegenteiligen Fall wird die Anforderung von den Programminstruktionen 120 bearbeitet und eine entsprechende Antwort generiert, die über die Schnittstelle 126 an das externe Lesegerät übertragen wird.

Die Speicherung der Referenzdaten 124 in den elektronischen Speicher 122 erfolgt vorzugsweise bei der Personalisierung des Bereichs 108. Nach Durchführung der Personalisierung des Bereichs 108, das heißt nach der Ausbildung der optischen Maske mit den Maskenbereichen 110, wird der Prozessor 118 mit dem externen Lesegerät einer das Dokument 100 ausstellenden Behörde so angesteuert, dass die von dem Treiber 116 aufgrund der Beaufschlagung mit der Strahlung 106 gelieferte Information als Referenzdaten 124 in dem elektronischen Speicher 122 gespeichert werden. Um diesen Vorgang zu ermöglichen, muss zuvor ein kryptographisches Protokoll mit Hilfe der Programminstruktionen 120 erfolgreich abgearbeitet werden, welches das Lesegerät bzw. die ausstellende Behörde als für diesen Schreibzugriff auf den elektronischen Speicher 122 autorisiert.

Ein nachfolgender Manipulationsversuch des Dokuments 100 muss ins Leere gehen. Wird beispielsweise die Maske in dem Bereich 108 durch eine andere Maske ersetzt oder wird die bereits aufgebrachte Maske durch Anbringung weiterer Maskenbereiche 110 verändert, so führt dies zu einer Änderung der von dem Treiber 116 gelieferten Information und somit zu einer Diskrepanz zwischen den Referenzdaten 124 und der erfassten optischen Information, welche zu einer Sperrung des Dokuments 100 führt.

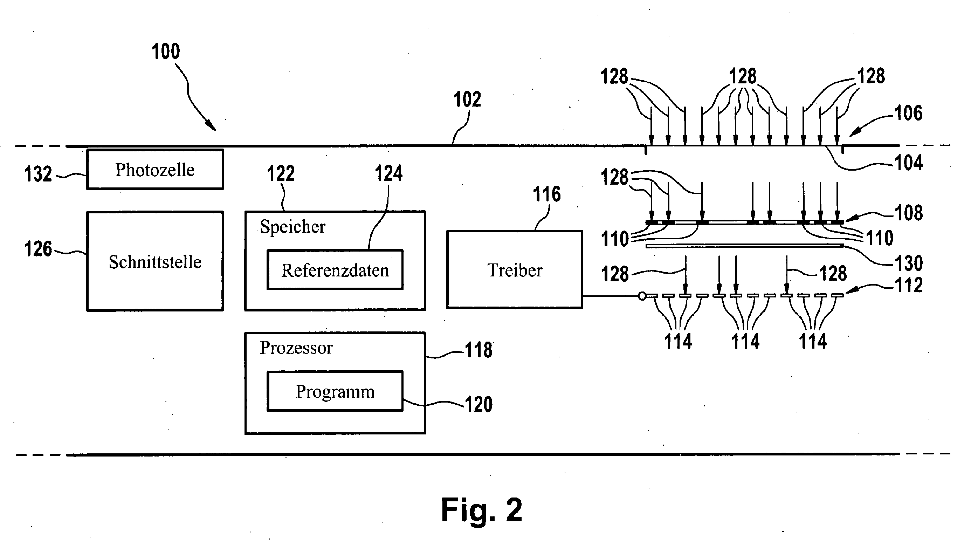

Die Figur 2.zeigt eine alternative Ausführungsform des Dokuments 100. In der Ausführungsform der Figur 2 befindet sich zwischen dem Bereich 108 und der strahlungssensitiven Matrix 112 ein Filter 130. Dieser Filter ist dazu ausgebildet, nur Strahlung in dem Frequenzbereich, in dem die Maskenbereiche 110 reflektierend oder absorbierend sind, durchzulassen. Dies führt dazu, dass nur Strahlen 128, die in diesem Frequenzbereich liegen, und die nicht auf einem der Maskenbereiche 110 aufgetroffen sind, die strahlungssensitive Matrix 112 erreichen. Diese hat vorzugsweise eine besondere Empfindlichkeit in dem Frequenzbereich, der von dem Filter 130 durchgelassen wird. Durch diese Maßnahme lässt sich das Signalrauschleistungsverhältnis hinsichtlich der Erfassung der optischen Information verbessern.

In der hier betrachteten Ausführungsform hat das Dokument 100 an seiner Oberfläche 102 eine Photozelle 132. Die Photozelle 132 kann die elektrischen und elektronischen Komponenten des Dokuments 100 unmittelbar mit elektrischer Energie versorgen. Die Energieversorgung findet also nur dann statt, wenn der Benutzer das Dokument 100 zum Beispiel aus seiner Brieftasche oder seinem Portemonnaie nimmt, so dass Licht die Photozelle 132 erreichen kann. Auch hierdurch ist eine Basic Access Control realisiert, da ein drahtloser Zugriff auf das Dokument 100 mit einem RFID-Verfahren nicht möglich ist, solange es sich in der Brieftasche oder dem Portemonnaie des Benutzers befindet, da nämlich dann kein Licht für die hinreichende Energieversorgung des Dokuments auf die Photozelle fällt.

Alternativ kann das Dokument 100 auch eine wiederaufladbare Batterie beinhalten, die es ermöglicht, das Dokument 100 auch dann zu benutzen, wenn kein externes Lesegerät vorhanden ist und / oder die Beleuchtungsverhältnisse nicht für die Energieversorgung ausreichend sind. In diesem Fall kann die Photozelle zum Wiederaufladen der Batterie dienen, um deren Lebensdauer zu verlängern.

Alternativ oder zusätzlich kann die Energie auch über eine Funkschnittstelle, beispielsweise eine RFID Schnittstelle, des Dokuments 100 geliefert werden.

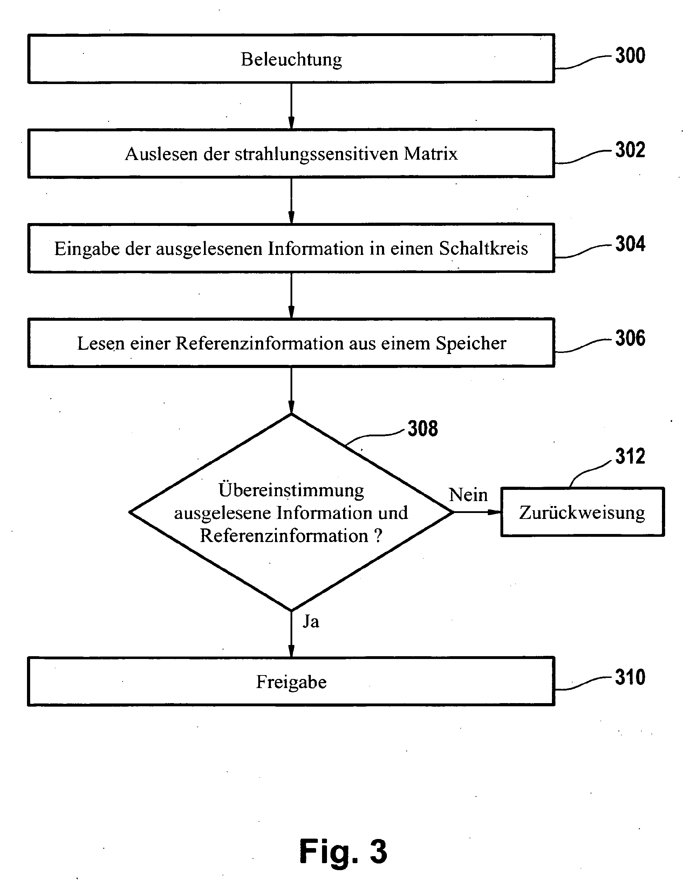

Die Figur 3 zeigt ein Flussdiagramm eines erfindungsgemäßen Verfahrens. In dem Schritt 300 wird das Dokument einer Strahlung ausgesetzt, indem es beispielsweise mit einer Strahlungsquelle beleuchtet wird. Diese Strahlung fällt durch die Maske des Dokuments auf dessen strahlungssensitive Matrix. In dem Schritt 302 wird die strahlungssensitive Matrix ausgelesen, um die optische Information, die der einfallenden Strahlung durch die Maske aufmoduliert worden ist, auszulesen.

In dem Schritt 304 wird die aus der strahlungssensitiven Matrix ausgelesene Information in einen Schaltkreis, beispielsweise einen Mikroprozessor, des Dokuments eingegeben. Der Mikroprozessor liest daraufhin in dem Schritt 306 eine Referenzinformation (vgl. Referenzdaten 124 der Figur 1) aus einem Speicher des Dokuments.

In dem Schritt 308 werden die ausgelesene Information und die Referenzinformation auf Übereinstimmung geprüft. Wenn eine hinreichende Übereinstimmung vorliegt, erfolgt in dem Schritt 310 eine Freigabe einer Funktionalität des Dokuments 100, beispielsweise zum Auslesen weiterer Daten aus dem elektronischen Speicher des Dokuments. Liegt eine solche Übereinstimmung nicht vor, so erfolgt in dem Schritt 312 eine Zurückweisung, das heißt eine oder mehrere der Funktionalitäten des Dokuments 100 werden blockiert.

Eine andere Verwendungsmöglichkeit der Maske ist deren Nutzung als optischer Datenspeicher. Zum Lesen des optischen Datenspeichers wird dieser einer geeigneten Strahlung ausgesetzt, der durch die Maske eine Information optisch aufmoduliert wird (vgl. Schritt 300). Diese Information wird mit Hilfe der strahlungssensitiven Matrix empfangen und in den Schaltkreis des Dokuments eingelesen (vgl. Schritt 302). Beispielsweise kann die Maske durch einen 2D-Barcode realisiert sein oder im Klartext persönliche Angaben, wie zum Beispiel Name und Adresse des Trägers des Dokuments beinhalten. Im letzteren Fall ist besonders vorteilhaft, dass die Information gleichermaßen im Klartext dem menschlichen Auge zugänglich ist, als auch durch Erfassung mittels der strahlungssensitiven Matrix unmittelbar dem Schaltkreis des Dokuments zur Verfügung steht.

Die strahlungssensitive Matrix kann als Photodiodenmatrix ausgebildet sein. Insbesondere kann die strahlungssensitive Matrix einen Photoleiter aufweisen. Als Material für den Photoleiter können organische Photoleiter verwendet werden. Durch Sensibilisierung geeigneter Photoleiter mit geeigneten Sensibilisatoren (zum Beispiel C₆₀, C₆₀-PBEM, TNF, TNFM) lassen sich diese einstellen in Bezug auf ihre spektrale Empfindlichkeit, die auf diese Weise zum Beispiel aus dem UV- in den sichtbaren oder NIR-Bereich geschoben werden kann.

Die Erzeugung von Ladungsträgern kann dann durch einen sogenannten "Photo Induced Electron Transfer" oder unter Bildung eines Charge-Transfer-Komplexes erfolgen. Auf diese Weise ist es zum Beispiel möglich, eine rein Infrarot-sensitive Photodiodenmatrix zu erzeugen, die Informationen, die nur im infraroten Spektralbereich sichtbar ist, auslesen kann. Entsprechend ist auch eine Verschiebung in den UV-Bereich möglich, wobei hierfür unter Umständen keine Sensibilisatoren benötigt werden, weil viele Photoleiter in diesem Bereich selbst unmittelbar angeregt werden können.

Die Figur 4 zeigt eine Ausführungsform des Dokuments 100 mit einem Dokumentenkörper 134 und einem integrierten elektronischen Schaltkreis (IC) 136, der die wesentlichen elektronischen Komponenten des Dokuments 100 integriert, wie zum Beispiel den Treiber 116, den Prozessor 118, den elektronischen Speicher 122 und / oder die Schnittstelle 126 - vgl. hierzu Figuren 1 und 2.

Die Maske wird hier durch graphische Personalisierungsinformation 138 gebildet. Hierbei kann es sich insbesondere um das Photo des Inhabers des Dokuments 100 oder dergleichen biometrische Merkmale handeln. Die graphische Personalisierungsinformation kann in Form einer Laserung, das heißt Schwärzung, Bleichung oder dergleichen, oder in holographischer Form, insbesondere mittels Volumenhologramm oder drucktechnisch, zum Beispiel durch ein Tintenstrahldruck, Digitaldruck, Laserdruck, Transferdruck, Thermosublimationsdruck oder ein anderes Druckverfahren aufgebracht werden.

Der in dem IC 136 integrierte Treiber ist mit Wort- und Bitleitungen 142 verbunden, die zur Adressierung der einzelnen Matrixelemente (vgl. Matrixelemente 114 der Figuren 1 und 2) der strahlungssensitiven Matrix 112 dienen.

Der IC 136 ist in der Ausführungsform der Figur 4 als RFID-Transponder ausgebildet. Beispielsweise ist der IC 136 für den Betrieb bei 13.56 MHz bzw. gemäß den Standards ISO14443A/B oder ISO15693 oder anderen RFID-Normen ausgebildet. Die hierfür vorgesehene Antenne 140 des Dokuments 100 hat einige Windungen, beispielsweise drei bis sieben Windungen, und wenige Ohm elektrischen Widerstand, typischerweise weniger als fünf Ohm. Die Antenne 140 kann drucktechnisch mittels polymerer elektrisch leitender Pasten hergestellt werden oder sie kann mittels lackisolierter Kupferspulen realisiert werden. Ferner kann die Antenne 140 auch ätztechnisch, lasertechnisch oder durch ein Tintenstrahldruckverfahren hergestellt werden.

Die bevorzugte Herstelltechnologie für die Antenne 140 einschließlich deren Kontaktierung mit dem IC 136 wird durch die Art und Weise der Herstellung der strahlungssensitiven Matrix 112 und der Ausführung der Wort- und Bitleitungen 142 und deren Verdrahtung 144 mit dem IC 136 bestimmt.

In der Ausführungsform mit einem kontaktlosen IC 136 werden die Wort- und Bitleitungen 142 bevorzugt drucktechnisch hergestellt. Sie können jedoch ebenso mittels Chip-On-Board (COB) Technik hergestellt werden. Die für den Betrieb des IC 136 und das Auslesen der strahlungssensitiven Matrix 112 benötigte elektrische Energie wird bei dieser Ausführungsform elektromagnetisch über die Antenne 140 in das Dokument 100 eingekoppelt.

Die Figur 5 zeigt eine Ausführungsform des Dokuments 100 mit einem reisepassförmigen Dokumentenkörper 134. Auch in dieser Ausführungsform ist der IC 136 zur Durchführung eines RFID-Verfahrens ausgebildet. Die Ausführungsform des Dokuments 100 der Figur 5 kann beispielsweise der durch die ICAO9303 für Reisepässe festgelegten Spezifizierung entsprechen. Dabei wird der Standard ISO14443A/B bei 13,56 MHz verwendet, wobei ein Leseabstand zwischen dem Dokument 100 und einem externen kontaktlosen RFID-Lesegerät von wenigen Zentimetern genügt. Neben der Ausbildung der Antenne 140 als Spule kann ebenso eine Dipolantenne verwendet werden. Dabei werden jedoch üblicherweise höhere RFID-Frequenzen, beispielsweise im 800 MHz- und 950 MHz-Bereich bis in den Mikrowellenbereich um 2,45 GHz verwendet.

Das Dokument 100 hat ein oder mehrere Personalisierungsfelder 146 zusätzlich zu der graphischen Personalisierungsinformation 138, die ebenfalls als optische Masken wirken. In dem oder den Personalisierungsfeldern 146 können Personalisierungsdaten unterschiedlicher Art aufgebracht sein, wie zum Beispiel eine Unterschrift, alphanumerische Information, Barcodes oder andere optische Codes, die jeweils als Maske für die darunter liegende strahlungssensitive Matrix 112 dienen. Auch die ICAO-Zeile kann als eine solche Maske dienen. Die strahlungssensitive Matrix 112 kann jeweils unter der graphischen Personalisierungsinformation 138 bzw. unter den Personalisierungsfeldern 146 angeordnet sein oder sich über dem gesamten Bereich des Dokuments 10 vollflächig erstrecken.

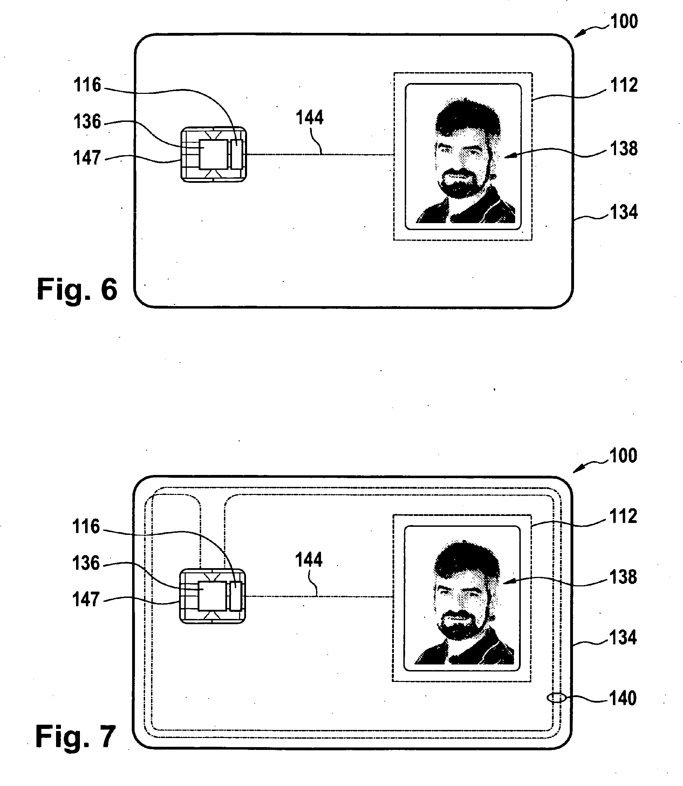

Die Figur 6 zeigt eine Ausführungsform des Dokuments 100 mit kontaktbehaftetem Chipmodul 147, in dem sich der IC 136 befindet. Die Verdrahtung 144 zeigt schematisch die Verbindung der strahlungssensitiven Matrix 112 mit dem Chipmodul 147. In einer beispielhaften Ausführungsform kann die strahlungssensitive Matrix 112 auf einem flexiblen und laminierfähigen Träger angeordneten sein.

Die Wort- und Bitleitungen 142 können mittels der Verdrahtung 144 zu dem Chipmodul 147 geführt werden, um mit diesem elektrisch leitend verbunden zu werden. In dem Chipmodul 147 befindet sich neben dem IC 136 der hier als getrennte Komponente ausgebildete Treiber 116. Generell kann jedoch die Treiberfunktion auch mit in den IC 136 integriert werden oder es können einzelne Treiberbausteine auch im Bereich der Zeilen und Spalten der strahlungssensitiven Matrix 112 mittels COB angeordnet werden.

Die Energieversorgung erfolgt bei dieser Ausführungsform vorzugsweise über das kontaktbehaftete Chipmodul 147 von einem externen Lesegerät. Ein solches externes Lesegerät dient einerseits zur elektrischen Kontaktierung des Chipmoduls 147 und andererseits zur Beaufschlagung der durch die graphische Personalisierungsinformation 138 und der Personalisierungsfelder 146 gebildeten Masken mit Licht.

Die Figur 7 zeigt eine Ausführungsform des Dokuments 100, wobei das Chipmodul 147 als sogenanntes Dual-Interface Modul ausgebildet ist.

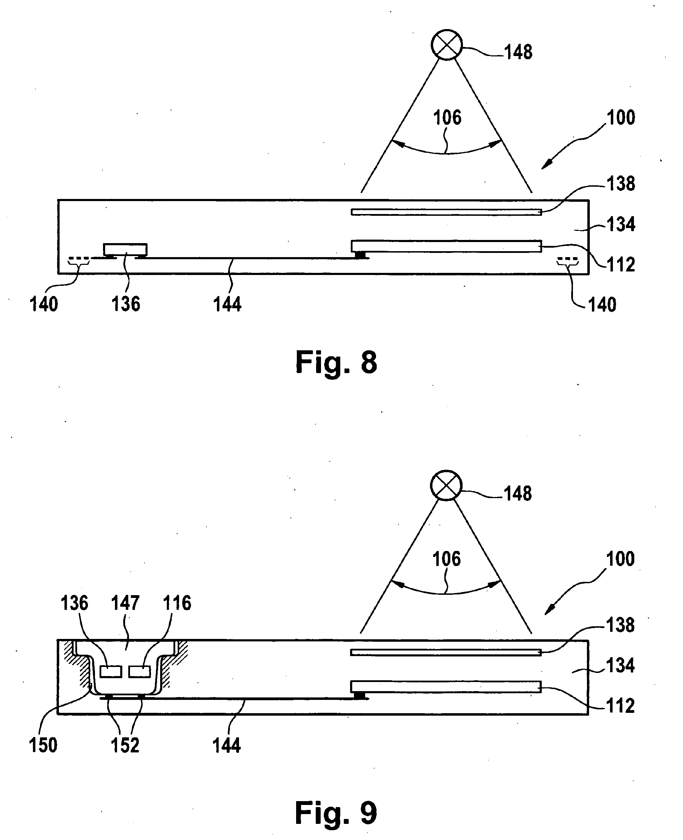

Die Figur 8 zeigt eine schichtförmig aufgebaute Ausführungsform des Dokuments 100. Die Antenne 140 wird beispielsweise mit drei bis sieben Windungen in einer inneren Lage des Dokuments 100 angeordnet. Der IC 136 und / oder der Treiber 116 können als ungehauster (nackter) IC direkt mittels diverser Kontaktiermethoden, insbesondere mittels COB, kontaktiert werden, oder es kann ein dünner Interposer, also ein Hilfsträger mit kontaktiertem IC verwendet werden. Es kann aber auch ein kleines SMD (Surface-Mounted Device) bzw. SMT (Surface-Mount Technology)-Bauteil verwendet werden. Die Verdrahtung 144 kann additiv oder subtraktiv wie an sich aus dem Stand der Technik für flexible Leiterplatten bzw. Chipkarten bekannt ausgeführt werden. Die strahlungssensitive Matrix 112 wird unterhalb der graphisch Personalisierungsinformation 138 angeordnet, so dass bei Beaufschlagung des Dokuments 100 mit der Strahlung 106 durch eine geeignete Lichtquelle 148 die Personalisierungsinformation maskierend, insbesondere filternd, für die Strahlung 106 wirkt, wodurch die strahlungssensitive Matrix 112 ein charakteristisches Signal erzeugt.

Die Figur 9 zeigt eine Ausführungsform des Dokuments 100 mit dem Chipmodul 147, welches den IC 136 und den Treiber 116 beinhaltet. Das Chipmodul 147 hat Kontakte 152 zur Kontaktierung mit der Verdrahtung 144 und ist in einer Kavität 150 des Dokuments 100 angeordnet.

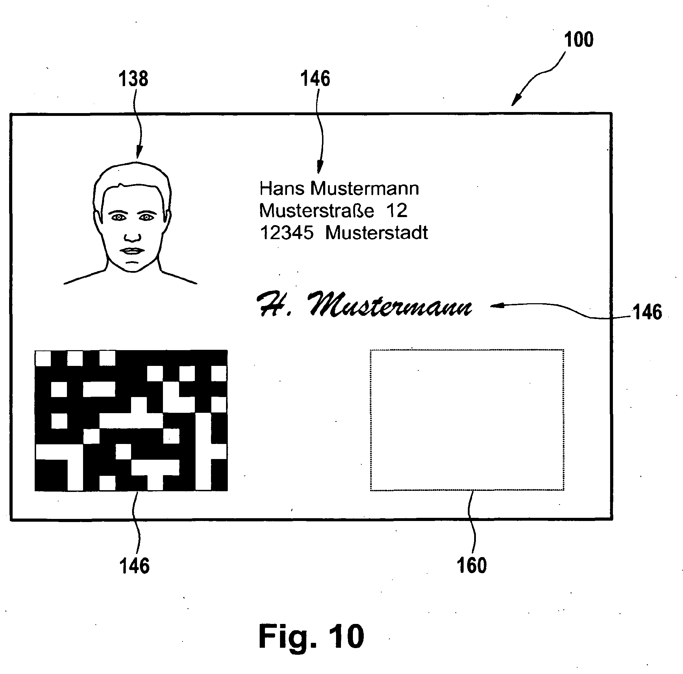

Die Figur 10 zeigt eine Ausführungsform des Dokuments 100, welches verschiedene durch Bestrahlung auslesbare Informationsfelder aufweist. Die graphische Personalisierungsinformation 138 besteht hier aus einem schematisch dargestellten Passbild. Ferner trägt das Dokument 100 Personalisierungsfelder 146 mit einem Adressfeld, einer Unterschrift bzw. einem Barcode. Schließlich hat das Dokument 100 ein Feld 160 mit einer im sichtbaren Frequenzbereich unsichtbaren Information.

Unterhalb der graphischen Personalisierungsinformation 138, den Personalisierungsfeldern 146 und dem Feld 160, die jeweils als optische Masken wirken, befindet sich jeweils eine strahlungssensitive Matrix. Alternativ ist die strahlungssensitive Matrix vollflächig ausgebildet, so dass sie sämtliche der optischen Masken erreicht.

Die Figur 11 zeigt eine Schnittansicht einer Ausführungsform des Dokuments 100 im Bereich der strahlungssensitiven Matrix 112. Die strahlungssensitive Matrix 112 hat obere Elektroden 154 und untere Elektroden 158 mit einem dazwischen angeordnetem Photoleiter. Wie in der Figur 12 perspektivisch dargestellt, verlaufen die oberen Elektroden 154 und die unteren Elektroden 158 in unterschiedliche Richtungen, das heißt, sie stehen hier senkrecht aufeinander. Durch die Schnittspunkte der oberen Elektroden 154 mit den unteren Elektroden 158 werden die Matrixelemente 114 (vgl. Fig. 1 und 2) der strahlungssensitiven Matrix 112 definiert.

Zumindest die oberen Elektroden 154 müssen transparent ausgebildet sein, so dass ein Strahl 128, (vgl. Figuren 1 und 2), der ein Matrixelement 114 erreicht, durch die betreffende obere Elektrode 154 hindurch den Photoleiter 156 erreicht, der hierdurch an dieser Stelle leitfähig wird, so dass eine elektrische Verbindung mit der darunter liegenden unteren Elektrode 158 hergestellt wird. Die Herstellung dieser elektrischen Verbindung wird als logisches Signal von dem Treiber 116 ausgelesen.

Die Figur 13 zeigt ein Lesegerät 162, welches für den Zugriff auf ein erfindungsgemäßes Dokument ausgebildet ist. Das Lesegerät 162 hat eine Datenverarbeitungseinheit 164, die mit einer Schnittstelle 166 gekoppelt ist. Die Schnittstelle 166 dient zum Aufbau einer Kommunikationsverbindung mit dem Dokument 100 über dessen entsprechende Schnittstelle 126 (vgl. Figur 1, 2). Die Schnittstelle des Lesegeräts 162 kann also kontaktbehaftet, kontaktlos oder als Dual-Interface ausgebildet sein. Insbesondere kann es sich um eine RFID-Schnittstelle handeln.

Das Lesegerät 162 hat ferner eine Strahlungsquelle 168. Die Strahlungsquelle 168 ist entweder permanent aktiviert oder wird dann von der Datenverarbeitungseinheit 164 aktiviert, wenn beispielsweise das Dokument 100 in das Lesegerät 162 eingeführt ist, sich in dessen Nähe befindet, und / oder ein elektrischer Kontakt zwischen den Schnittstellen 166 und 126 hergestellt ist. Die Strahlungsquelle 168 gibt Strahlung einer Frequenz ab, der durch die optische Maske des Dokuments 100 eine optische Information aufmoduliert wird, so dass diese durch die strahlungssensitive Matrix des Dokuments beispielsweise für die Zwecke der Selbstverifikation erfasst werden kann. Die Strahlungsquelle 168 kann in der Lesegerät integriert sein oder es kann sich um eine separate Komponente handeln, die von dem Lesegerät 162 angesteuert wird.

### Bezugszeichenliste

| | |
|---|---|
| 100 | Dokument |
| 102 | Oberfläche |
| 104 | Fenster |
| 106 | Strahlung |
| 108 | Bereich |
| 110 | Maskenbereich |
| 112 | strahlungssensitive Matrix |
| 114 | Matrixelement |
| 116 | Treiber |
| 118 | Prozessor |
| 120 | Programminstruktionen |
| 122 | elektronischer Speicher |
| 124 | Referenzdaten |
| 126 | Schnittstelle |
| 128 | Strahl |
| 130 | Filter |
| 132 | Photozelle |
| 134 | Dokumentenkörper |
| 136 | integrierter elektronischer Schaltkreis (IC) |
| 138 | graphische Personalisierungsinformation |
| 140 | Antenne |
| 142 | Wort- und Bitleitung |
| 144 | Verdrahtung |
| 146 | Personalisierungsfeld |
| 147 | Chipmodul |
| 148 | Lichtquelle |
| 150 | Kavität |
| 152 | Kontakt |
| 154 | obere Elektroden |
| 156 | Photoleiter |
| 158 | untere Elektrode |
| 160 | Feld |
| 162 | Lesegerät |
| 164 | Datenverarbeitungseinheit |
| 166 | Schnittstelle |
| 168 | Strahlungsquelle |

## Patentansprüche

1. Dokument mit einem Bereich (108) mit Mitteln (110; 138; 146; 160) zur optischen Aufmodulation einer Information auf eine einfallende Strahlung (106, 128), einer hinter dem Bereich angeordneten strahlungssensitiven Matrix (112, 114; 154, 156, 158) zur Erfassung der optischen Information, und einem Schaltkreis (116, 118, 122; 136) zum Auslesen der Information, wobei der Schaltkreis mit der Matrix gekoppelt ist.

2. Dokument nach Anspruch 1, wobei es sich bei dem Dokument um ein Wert- oder Sicherheitsdokument handelt, insbesondere ein Zahlungsmittel, wie zum Beispiel eine Banknote, eine Kreditkarte oder dergleichen, oder ein Ausweisdokument, wie zum Beispiel einen Reisepass, Personalausweis, Visum, Führerschein oder dergleichen.

3. Dokument nach Anspruch 1 oder 2, wobei es sich um eine Chipkarte handelt.

4. Dokument nach Anspruch 1, 2 oder 3, wobei der Bereich mit Mitteln (110; 138; 146; 160) zur optischen Aufmodulation personalisierbar ist.

5. Dokument nach einem der vorhergehenden Ansprüche, wobei die Mitteln (110; 138; 146; 160) zur optischen Aufmodulation in dem Bereich ausgebildet sind.

6. Dokument nach einem der vorhergehenden Ansprüche, wobei der Bereich für die Strahlung transparent ist.

7. Dokument nach einem der vorhergehenden Ansprüche, wobei der Bereich Laser-Initiatoren aufweist.

8. Dokument nach einem der vorhergehenden Ansprüche, wobei die Mittel (110; 138; 146; 160) zur optischen Aufmodulation aufgedruckt sind.

9. Dokument nach einem der vorhergehenden Ansprüche, wobei die Mittel (110; 138; 146; 160) zur optischen Aufmodulation ein Hologramm aufweisen.

10. Dokument nach einem der vorhergehenden Ansprüche, wobei die Mittel (110; 138; 146; 160) zur optischen Aufmodulation zur Reflektion eines Frequenzanteils der Strahlung ausgebildet sind und mit einem Filter (130), der zwischen den Mitteln (110; 138; 146; 160) zur optischen Aufmodulation und der strahlungssensitiven Matrix angeordnet ist, wobei der Filter zum Durchlass im wesentlichen nur des Frequenzanteils der Strahlung ausgebildet ist.

11. Dokument nach einem der vorhergehenden Ansprüche, wobei die strahlungssensitive Matrix erste transparente Elektroden (154), die in eine erste Richtung verlaufen, zweite transparente Elektroden (158), die in eine zweite Richtung verlaufen, und einen zwischen den ersten und zweiten Elektroden befindlichen Photoleiter (156) aufweisen, wobei durch die Schnittpunkte der ersten und zweiten Elektroden Bildpunkte (114) definiert sind.

12. Dokument nach einem der vorhergehenden Ansprüche, wobei die strahlungssensitive Matrix mehrere Bildpunkte (114) aufweist, und mit Mitteln (116) zur Erfassung der optischen Information durch Auslesen der Bildpunkte.

13. Dokument nach einem der vorhergehenden Ansprüche, mit einem Speicher (122) zur Speicherung einer Referenzinformation (124) und mit Mitteln (118) zur Überprüfung der erfassten optischen Information und der Referenzinformation auf Übereinstimmung.

14. Verfahren zur Eingabe einer Information in einen Schaltkreis (118, 122) eines Dokuments (100), wobei das Dokument eine optische Maske (110; 138; 146; 160) hat, hinter der eine strahlungssensitive Matrix (112) angeordnet ist, und wobei die strahlungssensitive Matrix mit dem Schaltkreis gekoppelt ist, mit folgenden Schritten:
- Bestrahlung (106, 128, 148) der optischen Maske,
- Auslesen (116) der strahlungssensitiven Matrix zur Erfassung der Information.

15. Computerprogrammprodukt mit von einem integrierten elektronischen Schaltkreis (118; 136) eines Dokuments (100) ausführbaren Instruktionen (120) zur Ansteuerung einer strahlungssensitiven Matrix (112) für die Erfassung einer optischen Information, die durch eine vor der strahlungssensitiven Matrix angeordnete optische Maske (110) auf die strahlungssensitiven Matrix projiziert wird.

## Claims

1. A document comprising a region (108) with means (110; 138; 146; 160) for optical modulation of information onto incident radiation (106, 128), comprising a radiation-sensitive matrix (112, 114; 154, 156, 158), arranged behind the aforesaid region, for detecting the optical information, and comprising a circuit (116, 118, 122; 136) for reading out the information, wherein the circuit is coupled to the matrix.

2. The document according to Claim 1, wherein the document is a value or security document, in particular a means of payment, such as a banknote, a credit card or the like, or an identity document, such as a passport, personal identity card, visa, driver's licence or the like.

3. The document according to Claim 1 or 2, wherein said document is a smart card.

4. The document according to Claim 1, 2 or 3, wherein the region with means (110; 138; 146; 160) for optical modulation can be personalised.

5. The document according to one of the preceding claims, wherein the means (110; 138; 146; 160) for optical modulation are formed in the region.

6. The document according to one of the preceding claims, wherein the region is transparent for the radiation.

7. The document according to one of the preceding claims, wherein the region comprises laser initiators.

8. The document according to one of the preceding claims, wherein the means (110; 138; 146; 160) for optical modulation are imprinted.

9. The document according to one of the preceding claims, wherein the means (110; 138; 146; 160) for optical modulation comprise a hologram.

10. The document according to one of the preceding claims, wherein the means (110; 138; 146; 160) for optical modulation are designed to reflect a frequency component of the radiation, said document also comprising a filter (130), which is arranged between the means (110; 138; 146; 160) for optical modulation and the radiation-sensitive matrix, wherein the filter is designed to allow only the frequency component of the radiation to pass through.

11. The document according to one of the preceding claims, wherein the radiation-sensitive matrix comprise first transparent electrodes (154), which run in a first direction, second transparent electrodes (158), which run in a second direction, and a photoconductor (156) arranged between the first and second electrodes, wherein image points (114) are defined by the points of intersection of the first and second electrodes.

12. The document according to one of the preceding claims, wherein the radiation-sensitive matrix comprises a plurality of image points (114), said document also comprising means (116) for detecting the optical information by reading out the image points.

13. The document according to one of the preceding claims, comprising a memory (122) for storing reference information (124) and comprising means (118) for checking that the detected optical information and the reference information match.

14. A method for inputting information into a circuit (118, 122) of a document (100), wherein the document has an optical mask (110; 138; 146; 160), behind which a radiation-sensitive matrix (112) is arranged, and wherein the radiation-sensitive matrix is coupled to the circuit, said method comprising the following steps:
- irradiating (106, 128, 148) the optical mask,
- reading out (116) the radiation-sensitive matrix for detecting the information.

15. A computer program product comprising instructions (120), executable by an integrated circuit (118; 136) of a document (100), for activating a radiation-sensitive matric (112) for detecting optical information, which is projected onto the radiation-sensitive matrix through an optical mask (110) arranged in front of the radiation-sensitive matrix.

## Revendications

1. Document avec une zone (108) comportant des moyens (110 ; 138 ; 146 ; 160) pour une modulation optique d'une information sur un rayonnement incident (106, 128), une matrice (112, 114 ; 154, 156, 158) sensible au rayonnement, agencée derrière la zone pour la détection de l'information optique, et un circuit (116, 118, 122 ; 136) pour la lecture de l'information, dans lequel le circuit est couplé avec la matrice.

2. Document selon la revendication 1, dans lequel le document est un document de valeur ou de sécurité, en particulier un moyen de paiement, tel que par exemple un billet de banque, une carte de crédit ou autre, ou encore un document d'identité, tel que par exemple un passeport, une carte d'identité, un visa, un permis de conduire ou autre.

3. Document selon la revendication 1 ou 2, dans lequel il s'agit d'une carte à puce.

4. Document selon la revendication 1, 2 ou 3, dans lequel la zone comportant les moyens (110 ; 138 ; 146 ; 160) pour la modulation optique peut être personnalisée.

5. Document selon l'une des revendications précédentes, dans lequel les moyens (110 ; 138 ; 146 ; 160) pour la modulation optique sont formés dans la zone.

6. Document selon l'une des revendications précédentes, dans lequel la zone est transparente au rayonnement.

7. Document selon l'une des revendications précédentes, dans lequel la zone comporte des initiateurs laser.

8. Document selon l'une des revendications précédentes, dans lequel les moyens (110 ; 138 ; 146 ; 160) pour la modulation optique sont imprimés.

9. Document selon l'une des revendications précédentes, dans lequel les moyens (110 ; 138 ; 146 ; 160) pour la modulation optique comportent un hologramme.

10. Document selon l'une des revendications précédentes, dans lequel les moyens (110 ; 138 ; 146 ; 160) pour la modulation optique sont conçus pour réfléchir une composante de fréquences du rayonnement, et avec un filtre (130) agencé entre les moyens (110 ; 138 ; 146 ; 160) pour la modulation optique et la matrice sensible au rayonnement, le filtre étant conçu pour ne laisser passer quasiment que la composante de fréquences du rayonnement.

11. Document selon l'une des revendications précédentes, dans lequel la matrice sensible au rayonnement comporte des premières électrodes transparentes (154) s'étendant dans une première direction, des deuxièmes électrodes transparentes (158) s'étendant dans une deuxième direction, et un photoconducteur (156) situé entre les premières et deuxièmes électrodes, dans lequel des pixels (114) sont définis par les intersections des premières et deuxièmes électrodes.

12. Document selon l'une des revendications précédentes, dans lequel la matrice sensible au rayonnement comporte plusieurs pixels (114), et avec des moyens (116) pour la détection de l'information optique par la lecture des pixels.

13. Document selon l'une des revendications précédentes, avec une mémoire (122) pour l'enregistrement d'une information de référence (124) et avec des moyens (118) pour la vérification de l'information optique détectée et de l'information de référence quant à leur concordance.

14. Procédé pour la saisie d'une information dans un circuit (118, 122) d'un document (100), dans lequel le document possède un masque optique (110 ; 138 ; 146 ; 160) derrière lequel est agencée une matrice sensible au rayonnement (112), et dans lequel la matrice sensible au rayonnement est couplée avec le circuit, avec les étapes suivantes :
- irradiation (106, 126, 148) du masque optique,
- lecture (116) de la matrice sensible au rayonnement, pour la détection de l'information.

15. Produit de programme informatique avec des instructions (120) exécutables par un circuit électronique intégré (118 ; 136) d'un document (100), pour la détection d'une information optique projetée sur la matrice sensible au rayonnement par un masque optique (110) agencé devant la matrice sensible au rayonnement.
